# EUROPEAN PATENT APPLICATION

(11) **EP 4 787 607 A1**
(43) Date of publication of application: **05.08.2026**
(21) Application number: 25855383.3
(22) Date of filing: 27.06.2025
(51) Int. Cl.: H01M 50/536, H01M 50/204, H01M 50/249, B23K 37/04

(54) **BATTERY MODULE, AIR RELEASE JIG USED WHEN MANUFACTURING SAME, METHOD FOR MANUFACTURING SAME, BATTERY PACK INCLUDING SAME, AND VEHICLE**

(30) Priority: 13.12.2024 KR 20240186206
(71) Applicant: LG ENERGY SOLUTION, LTD., Seoul 07335 (KR)
(72) Inventor: SEON, Sang-Ok, Daejeon 34122 (KR); SHIN, Jae-Wook, Daejeon 34122 (KR); KIM, Seon-Woo, Daejeon 34122 (KR); KIM, Jee-Won, Daejeon 34122 (KR)
(74) Representative: Plasseraud IP
(86) International application number: PCT/KR2025/009103
(87) International publication number: WO 2026/127244

(57) **Abstract**

A battery module of the present disclosure may include a cell stack composed of a plurality of battery cells that each has an electrode lead; and a cover frame covering the front or rear part of the cell stack, wherein the plurality of electrode leads may include a lead overlapping portion formed to overlap at least partially on the outside of the cover frame and configured to be welded, and wherein the cover frame may include a body portion having a slit through which the electrode lead passes; and a support portion that is disposed to be spaced apart from the lead overlapping portion, is positioned between the lead overlapping portion and the body portion, and assists in the mutual close contact and welding of the lead overlapping portions.

## Description

### TECHNICAL FIELD

The present disclosure relates to a battery module, an air release jig used in manufacturing the same, a method for manufacturing the same, and a battery pack and a vehicle including the same.

This application is based on and claims priority from Korean Patent Application No. 10-2024-0186206, filed on December 13, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. When a higher output voltage is required, a plurality of battery cells may be connected in series to form a battery module or a battery pack. Additionally, in order to increase the charging and discharging capacity, a plurality of battery cells may be connected in parallel to form a battery module or a battery pack. Therefore, the number of battery cells included in the battery module or battery pack may be variously set according to the required output voltage or the charging and discharging capacity.

When configuring a battery module by connecting a plurality of battery cells in series/parallel, electrode leads may be laser welded to a busbar. Here, the busbar may refer to a conductor made of a metal material such as copper and typically manufactured in the shape of a rod or rectangular plate.

However, the method for manufacturing a battery module connecting the electrode leads via busbars may have the disadvantage of increasing manufacturing costs and weight.

Therefore, there is a need to develop a battery module structure configured to electrically connect battery cells by welding the electrode leads of the battery cells without including busbars.

### DISCLOSURE

### Technical Problem

The present disclosure is designed to solve the problems of the related art, and therefore the present disclosure is directed to providing a battery module configured to electrically connect battery cells by welding the electrode leads of the battery cells without including a busbar.

Additionally, the present disclosure is directed to providing a battery module capable of supporting a device that applies pressure to the electrode leads so that the electrode leads are welded in a state of close contact with each other.

Additionally, the present disclosure is directed to providing a device that applies pressure by releasing air toward the electrode leads so that the electrode leads are welded in a state of close contact with each other.

Additionally, the present disclosure is directed to providing a method for manufacturing a battery cell that includes a method for welding electrode leads capable of welding the electrode leads in a state of close contact without a busbar.

However, technical problems to be solved by the present disclosure are not limited to the above-described problems, and other problems not mentioned herein may be clearly understood by those skilled in the art from the following description of the present disclosure.

### Technical Solution

In order to solve the above problem, a battery module of the present disclosure may include a cell stack composed of a plurality of battery cells that each has an electrode lead; and a cover frame covering the front or rear part of the cell stack, wherein the plurality of electrode leads may include a lead overlapping portion formed to overlap at least partially on the outside of the cover frame and configured to be welded, and wherein the cover frame may include a body portion having a slit through which the electrode lead passes; and a support portion that is disposed to be spaced apart from the lead overlapping portion, is positioned between the lead overlapping portion and the body portion, and assists in the mutual close contact and welding of the lead overlapping portions.

The support portion may include a first support portion and a second support portion that are spaced apart from each other and disposed to face each other, and may be configured such that an air channel is formed in a space between the first support portion and the second support portion.

The cover frame may further include a guide portion that protrudes from the body portion toward the outside of the battery module and has a first guide portion and a second guide portion spaced apart in the stacking direction of the battery cells, and the first support portion may protrude from the first guide portion toward the second guide portion, and the second support portion may protrude from the second guide portion toward the first guide portion.

The support portion may include an inclined surface that is inclined at a specified angle with respect to the guide portion and is configured such that the distance from the lead overlapping portion increases as the inclined surface approaches the central axis between the first guide portion and the second guide portion.

The air channel may have a cross-sectional area that becomes narrower as the distance from the body portion decreases due to the inclined surfaces formed on the first support portion and the second support portion, respectively.

The support portion may further include a parallel surface extending from the inclined surface toward the body portion and parallel to the guide portion, and the parallel surface of the first support portion and the parallel surface of the second support portion may be spaced apart by a first gap, and the inclined surface of the first support portion and the inclined surface of the second support portion may be spaced apart by a second gap wider than the first gap.

The air channel may be a passage through which air released by an air release jig configured to press the other surface of the lead overlapping portion by providing a pressing force in a second direction opposite to a first direction, which is the pressing direction of a masking jig configured to press one surface of the lead overlapping portion, flows in the second direction.

The masking jig and the air release jig may be disposed in opposite directions based on the lead overlapping portion to press the lead overlapping portion in opposite directions, and the pressing force of the masking jig and the pressure of air released from the air release jig may be configured to be equal.

The cover frame may further include a sealing portion connecting the ends of the first guide portion and the second guide portion.

The battery module may further include a first coupling member positioned on one surface of the cover frame and configured to be coupled in close contact with each other between the cover frame and the air release jig.

An air release jig of the present disclosure may include a pump unit configured to inject air; an air release unit seated on the body portion and configured to release air toward the lead overlapping portion through the air channel; and a main body having a conduit connecting the pump unit to the air release unit.

The air release jig may further include a second coupling member positioned on one surface of the main body and configured to be coupled in close contact with each other between the cover frame and the air release jig.

The air release units may be provided in plurality, and the plurality of air release units may be disposed to be spaced apart along the stacking direction of the battery cells, and the conduit may be configured in a parallel structure to be connected to each of the plurality of air release units.

The present disclosure may relate to a battery pack including a battery module.

The present disclosure may relate to a vehicle including a battery module.

A method for manufacturing a battery module of the present disclosure may include a step of preparing the cover frame; a step of inserting two or more of the electrode leads into the slits formed in the cover frame and drawing them out in a direction toward the outside of the battery module; a step of bending two or more of the electrode leads passing through the slits to overlap each other to form the lead overlapping portion, and positioning the lead overlapping portion outside the cover frame; a step of placing the masking jig on the outer surface of the lead overlapping portion and pressing the outer surface of the lead overlapping portion using the masking jig; a step of placing the air release jig between the body portion and the lead overlapping portion and pressing the inner surface of the lead overlapping portion using the air release jig; and a step of performing welding on the lead overlapping portion.

### Advantageous Effects

According to one aspect of the present disclosure, there may be provided a battery module configured to electrically connect battery cells by welding the electrode leads of the battery cells without including a busbar. Therefore, the manufacturing costs of the battery module may be lowered. Additionally, the weight of the battery module may be reduced. Additionally, there are no component configurations welded in direct contact with the electrode lead, thereby minimizing a problem of welding defects caused by melting or deformation of the component due to welding.

Additionally, according to another aspect of the present disclosure, there may be provided a battery module capable of supporting a device that applies pressure to the electrode leads so that the electrode leads are welded in a state of close contact with each other. Therefore, the electrode leads may be welded in complete close contact without a gap. Therefore, the weldability of the electrode leads may be improved.

Additionally, according to still another aspect of the present disclosure, the air velocity may be increased and the air pressure may be increased by partially reducing the cross-sectional area of the passage through which the discharged air moves, using a device that provides pneumatic pressure by discharging air to the electrode leads.

Additionally, according to still another aspect of the present disclosure, there may be provided a device that applies pressure (e.g., air pressure) to the electrode leads so that the electrode leads are welded in a state of close contact with each other, and a method for manufacturing a battery cell using the device. Therefore, unlike the case of directly coupling or contacting the electrode leads, the electrode leads may be welded in complete contact with each other without a gap while preventing damage to the electrode leads. Therefore, the weldability of the electrode leads may be improved.

In addition, the present disclosure may have various other effects, which will be described in each embodiment, or descriptions of effects that may be easily inferred by those skilled in the art will be omitted.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a front perspective view of a battery module according to an embodiment of the present disclosure.
FIG. 2 is a rear perspective view of a battery module according to an embodiment of the present disclosure.
FIG. 3 is an exploded perspective view of the battery module of FIG. 2.
FIG. 4 is a perspective view showing a cover frame of a battery module according to the present disclosure.
FIG. 5 is a rear side cross-sectional view of the battery module taken along line I-I' of FIG. 2.
FIG. 6 is an enlarged view of section A of FIG. 5.
FIG. 7 is a further enlarged view of FIG. 6.
FIG. 8 is a view showing a state in which a masking jig and an air release jig are seated on an electrode lead and a cover frame.
FIG. 9 is a view showing a support portion according to another embodiment of the present disclosure.
FIG. 10 is a view showing a support portion according to still another embodiment of the present disclosure.
FIG. 11 is a view showing a cover frame according to still another embodiment of the present disclosure.
FIG. 12 is a view showing a portion of a battery module according to still another embodiment of the present disclosure.
FIG. 13 is a perspective view showing an air release jig used during electrode lead welding according to an embodiment of the present disclosure.
FIG. 14 is a side view showing a state in which an air release jig and a battery module are being coupled to each other according to an embodiment of the present disclosure.
FIG. 15 is a view showing a state in which a masking jig and an air release jig are coupled to a battery module according to an embodiment of the present disclosure.
FIG. 16 is a perspective view showing an air release jig according to another embodiment of the present disclosure.
FIG. 17 is a view for describing a battery pack including a battery module according to an embodiment of the present disclosure.
FIG. 18 is a view for describing a vehicle including the battery pack of FIG. 17.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Additionally, to help understanding of the present disclosure, the accompanying drawings are not illustrated on an actual scale, but the dimensions of some components may be exaggerated. Additionally, the same reference numeral may be assigned to the same component in different embodiments.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Throughout the specification, when referring to "A and/or B", it means A, B or A and B, unless expressly stated to the contrary, and when referring to "C to D", it means C or more and D or less, unless expressly stated to the contrary.

Meanwhile, terms indicating directions such as upper, lower, left, right, front, and back may be used in the present disclosure, but these terms are only for convenience of description, and it is obvious to those skilled in the art that the terms may vary depending on the position of a reference object or an observer.

For example, in the embodiment of the present disclosure, the X-axis direction illustrated in the drawings may mean a width direction or left-right direction, the Y-axis direction may mean a length direction or front-back direction perpendicular to the X-axis direction on the horizontal plane (X-Y plane), and the Z-axis direction may mean an upper-lower direction (vertical direction) perpendicular to both the X-axis direction and the Y-axis direction.

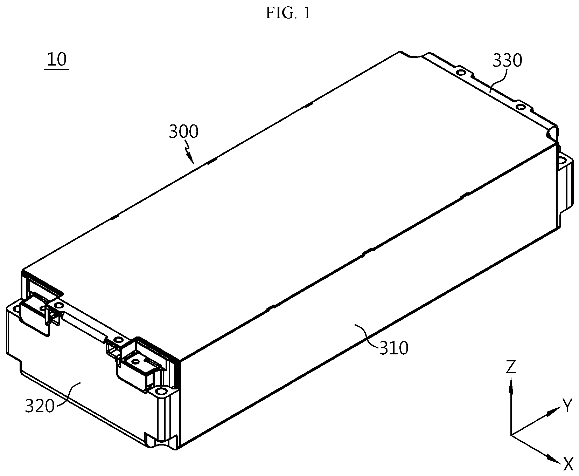

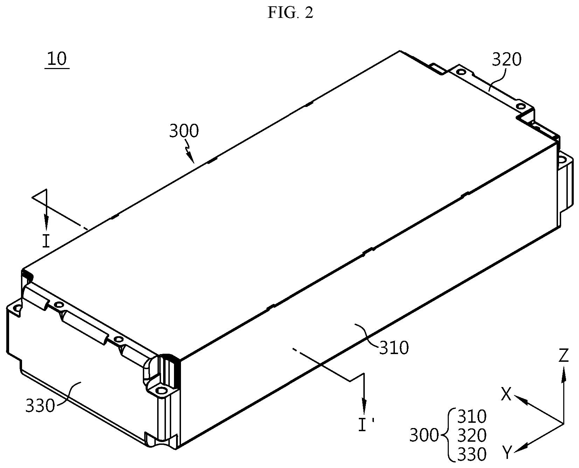

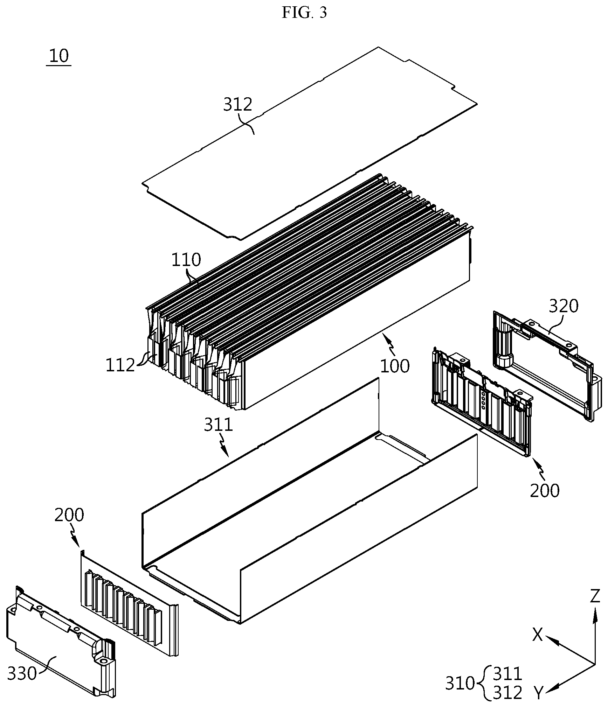

FIG. 1 is a front perspective view of a battery module 10 according to an embodiment of the present disclosure. FIG. 2 is a rear perspective view of a battery module 10 according to an embodiment of the present disclosure. FIG. 3 is an exploded perspective view of the battery module 10 of FIG. 2.

The battery module 10 may include a cell stack 100 and a cover frame 200. The battery module 10 may further include a case 300 in addition to the above-described components. Here, the battery module 10 may be defined as a battery unit or a cell assembly.

First, referring mainly to FIG. 3, the cell stack 100 may include a battery cell 110. The battery cell 110 may be provided in plurality. At this time, the plurality of battery cells 110 may be electrically connected to each other.

The plurality of battery cells 110 may be stacked along one direction. For example, as illustrated in FIG. 3, the plurality of battery cells 110 may be disposed in parallel in the left-right direction (X-axis direction) while being erected in a vertical direction (Z-axis direction).

More specifically, the plurality of battery cells 110 may include an electrode assembly, a cell case that accommodates the electrode assembly, and an electrode lead 112 configured to protrude to the front and/or rear sides of the cell case.

The electrode assembly has a stack structure in which a positive electrode plate, a separator, a negative electrode plate, and a separator are repeatedly stacked, wherein the positive electrode plate and the negative electrode plate are provided with an electrode tab, and one or more electrode tabs may be connected to the electrode lead 112.

The cell case may be configured to include a metal thin film, for example, an aluminum thin film, to protect internal components such as an electrode assembly and an electrolyte, and to supplement electrochemical properties by the electrode assembly and the electrolyte and to improve heat dissipation. The aluminum thin film may be interposed between an insulating layer formed of an insulating material and an internal adhesive layer to secure electrical insulation.

The electrode lead 112 is connected to the electrode assembly and may be drawn out to the outside of the cell case to function as an electrode terminal. The electrode leads 112 may be provided in a pair, and the pair of electrode leads 112 may be drawn out from both ends of the battery cell 110, that is, in the length direction (±Y direction). At this time, the pair of electrode leads 112 may be a positive electrode lead and a negative electrode lead.

Meanwhile, the present disclosure is not limited by the specific type or shape of this battery cell 110, and various battery cells 110 known at the time of filing of the present disclosure may be employed to configure the battery module 10 of the present disclosure. While the present embodiment targets a pouch-type secondary battery with high energy density and easy stacking as shown in the drawings, it is obvious that a cylindrical or prismatic secondary battery may be applied as the battery cell 110.

Referring to FIGS. 1 to 3, the case 300 may be configured to accommodate the cell stack 100. Specifically, the case 300 may be configured to form a receiving space and accommodate the cell stack 100 in the receiving space. This case 300 may be made of a metal material having rigidity and heat resistance to physically or chemically protect the accommodated cell stack 100.

More specifically, referring to FIGS. 1 to 3, the case 300 may include a case body 310, a front end cover 320, and a rear end cover 330.

The case body 310 may include a U-frame 311 and a top plate 312. The U-frame 311 may include a pair of side plates covering the left side surface and the right side surface of the cell stack 100 and a base plate covering the lower surface of the cell stack 100. The pair of side plates and the base plate may be formed integrally.

The front end cover 320 and the rear end cover 330 may be respectively coupled to the open front and rear surfaces of the case body 310. The front end cover 320 and the rear end cover 330 may be coupled to the case body 310 by welding or a snap-fit structure. However, the structure and shape of the case 300 are not limited by the embodiment and may be designed and modified in various ways, and the case may be omitted.

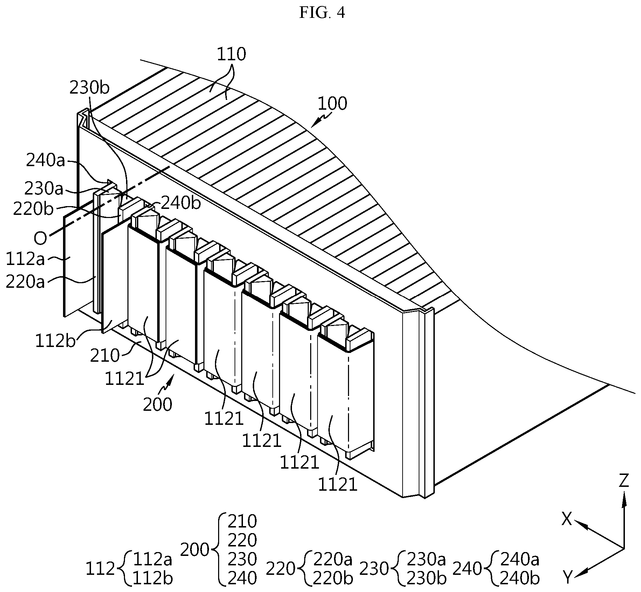

Referring to FIG. 3, the cover frame 200 may be configured to support the cell stack 100. The cover frame 200 may cover the front or rear part of the cell stack 100. The cover frame 200 may include an electrically insulating material, for example, a plastic material. In the cover frame 200, a slit (e.g., the slit 240 of FIG. 4) through which the electrode lead 112 may pass may be formed.

The cover frame 200 described in the present disclosure may generally be configured to cover the rear part of the cell stack 100 where a busbar was previously disposed. Therefore, the following description will be based on the cover frame 200 covering the rear part of the cell stack 100. However, it is obvious that the cover frame 200 of the present disclosure may also be applied to a configuration covering the front part of the cell stack 100.

Conventionally, a busbar is mounted on the outer surface of the cover frame 200, and a plurality of electrode leads 112 are welded to each busbar, thereby connecting battery cells 110 in series and/or in parallel. However, according to the method for manufacturing the battery module 10 in which the electrode leads 112 are connected via busbars, there is a problem of increasing manufacturing costs and weight.

The battery module 10 according to the present disclosure may not include a busbar. According to an embodiment of the present disclosure, even if the electrode leads 112 are not via a busbar or supported by a busbar, the electrode leads 112 may be configured to be welded to each other. Therefore, the manufacturing costs of the battery module may be reduced. Additionally, the weight of the battery module may be reduced.

Specifically, the battery module 10 according to the present disclosure may include a cover frame 200 configured to support the welding of the electrode leads 112 so that the electrode leads 112 may be completely sealed without forming a gap between the electrode leads 112 in the front-back direction by applying pressure to the electrode leads 112 in the front-back direction. Hereinafter, the configuration and structure of the cover frame 200 will be described in more detail.

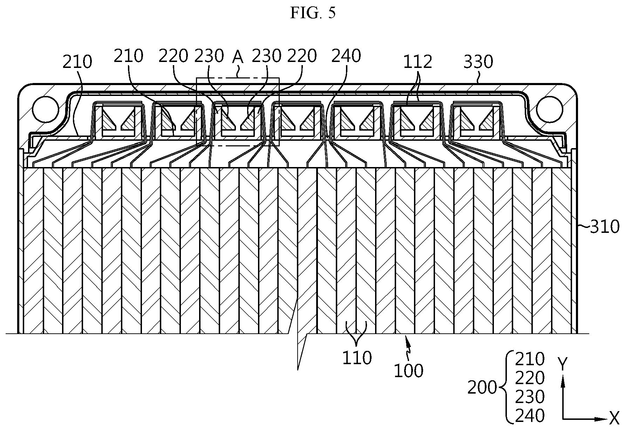

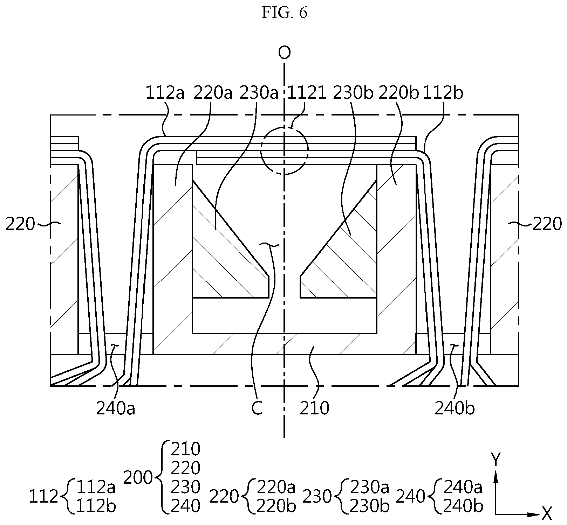

FIG. 4 is a perspective view showing a cover frame 200 of a battery module 10 according to the present disclosure. FIG. 5 is a rear side cross-sectional view of the battery module taken along line I-I' of FIG. 2. FIG. 6 is an enlarged view of section A of FIG. 5.

The electrode leads 112 of adjacent battery cells 110 may overlap each other according to a predetermined pattern. Therefore, the battery cells 110 may be connected in series or in parallel.

For example, referring to FIGS. 4 to 6, a plurality of consecutive battery cells 110 may be disposed as a single unit, with the units of the same polarity facing the same direction, and the units of different polarities facing opposite directions. And, the electrode leads 112 may be bonded in a pattern where the positive electrode leads of one unit and the negative electrode leads of another unit overlap each other and then are welded together as a single body. In this case, the battery cells 110 may be connected in series and/or in parallel.

For example, although not illustrated in the drawings, adjacent battery cells 110 may be disposed such that the positive electrode lead and the negative electrode lead face opposite directions. The positive electrode lead of one battery cell 110 and the negative electrode lead of another battery cell 110 adjacent thereto may be overlapped on the front surface of this cell stack 100. And, the negative electrode lead of one battery cell 110 and the positive electrode lead of another battery cell 110 adjacent thereto may be overlapped on the rear surface of the cell stack 100. After overlapping the electrode leads 112 of the battery cells 110 in this pattern, they may be welded together as a single body to bond the electrode leads 112. In this case, the battery cells 110 may be connected in series. However, the pattern of the electrode leads 112 is not limited by the embodiment, and may be designed and modified in various ways.

In particular, the electrode leads 112 according to an embodiment of the present disclosure may electrically connect the battery cells 110 by welding the overlapping electrode leads 112 together without a busbar of a metal conductor according to the prior art.

Referring to FIG. 4, the electrode leads 112 of the battery cells 110 may be drawn out to the outside of the cover frame 200 through the slits 240. The plurality of electrode leads 112 may overlap at least partially on the outside of the cover frame 200 to form a lead overlapping portion 1121. In other words, two or more electrode leads 112 to be electrically connected may overlap at least partially on the outside of the cover frame 200 to form a lead overlapping portion 1121. The lead overlapping portion 1121 may be disposed to face and be parallel to at least a portion of the cover frame 200.

The lead overlapping portion 1121 may be configured to be welded to each other. Specifically, the plurality of electrode leads 112 forming the lead overlapping portion 1121 may be configured to be bonded together by a method for welding electrode leads 112 to be described later so as not to be separated from each other. The welding method performed at this time may adopt any one of, for example, laser welding, ultrasonic welding, or resistance welding.

The cover frame 200 may include a body portion 210 and a support portion 230.

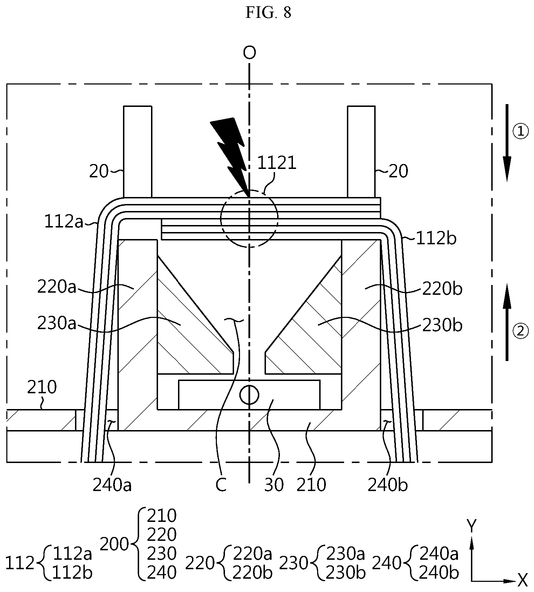

The body portion 210 may have a plate shape structure extending along the stacking direction of the cell stack 100. A slit 240 through which the electrode lead 112 passes may be formed in the body portion 210. The slits 240 may be formed in plurality along the stacking direction of the battery cells 110. The plurality of slits 240 may be disposed to be spaced apart from each other. An air release jig (e.g., the air release jig 30 of FIG. 8) to be described later may be seated on the body portion 210.

The support portion 230 may assist in the mutual close contact and welding of the lead overlapping portions 1121. According to the method for welding electrode leads 112 to be described later, when welding a plurality of electrode leads 112, the air release jig 30 to be described later may apply pressure by discharging air toward the electrode leads 112 so that the plurality of electrode leads 112 may be in close contact with each other without a gap. At this time, the support portion 230 may be disposed in the air passage to further increase the air pressure.

That is, the support portion 230 may be positioned between the lead overlapping portion 1121 and the body portion 210. At this time, the support portion 230 may be disposed to be spaced apart from the electrode leads 112. In other words, the support portion 230 may not contact the electrode leads 112, particularly the lead overlapping portion 1121. Therefore, the support portion 230 may be configured to assist in the welding of the electrode leads 112 without directly contacting the lead overlapping portion 1121.

According to an embodiment of the present disclosure, the battery cells 110 may be configured to be electrically connected by forming an overlapping portion 1121 by mutually overlapping the electrode leads 112 without a busbar that is a metal conductor according to the prior art and then by welding the lead overlapping portion 1121. Therefore, the present disclosure may not include a busbar, thereby lowering the manufacturing costs of the battery module 10 and reducing the weight of the battery module 10.

Additionally, when welding the electrode leads 112, there are no component configurations welded in direct contact with the lead overlapping portion 1121, thereby minimizing a problem of welding defects caused by melting or deformation of the component due to welding.

If only the electrode leads 112 are overlapped and welded without a rigid medium such as a busbar, a gap may be formed between them, resulting in defects. According to an embodiment of the present disclosure, the air release jig 30 may apply pressure so that the plurality of electrode leads 112 may be in close contact with each other without a gap. In particular, the air release jig 30 supports the rear surfaces of the electrode leads 112, thereby enabling reliable welding between the electrode leads 112 even without a busbar.

The cover frame 200 may further include a guide portion 220.

The guide portion 220 may be configured to guide the extension direction of the electrode leads 112. The guide portion 220 may protrude from the body portion 210 in an outward direction (+Y-axis direction) of the battery module 10.

The guide portions 220 may be provided in plurality. The plurality of guide portions 220 may be disposed to be spaced apart in the stacking direction (X-axis direction) of the battery cells 110. The guide portions 220 may be positioned on the side surface of the slit 240. The guide portions 220 may be positioned on both side surfaces of the slit 240. Therefore, the electrode lead 112 passing through the slit 240 may be disposed to extend in the outward direction of the battery module 10 (e.g., in the +Y-axis direction of FIG. 4) by the two guide portions 220 positioned on both side surfaces of the slit 240.

Referring to FIG. 6, the guide portion 220 may include a first guide portion 220a and a second guide portion 220b that are spaced apart from each other and disposed side by side, wherein the second guide portion 220b is disposed in the right direction (+X-axis direction) of the first guide portion 220a. When the body potion 210 has a first slit 240a and a second slit 240b disposed to the right of the first slit 240a, the first guide portion 220a and the second guide portion 220b may be disposed between the first slit 240a and the second slit 240b. For example, the first guide portion 220a may be positioned in the right direction of the first slit 240a, and the second guide portion 220b may be positioned in the left direction (-X-axis direction) of the second slit 240b.

At this time, the support portion 230 may be formed to extend from the guide portion 220. For example, the support portion 230 may be formed to extend leftward or rightward from the guide portion 220. A plurality of support portions 230 may be provided. The plurality of support portions 230 may be disposed to be spaced apart in the stacking direction of the battery cells 110.

The support portion 230 may include a first support portion 230a and a second support portion 230b that are disposed to face each other. The first support portion 230a and the second support portion 230b may be disposed to face each other. The first support portion 230a and the second support portion 230b may be formed symmetrically based on a central axis O that passes through the center of the lead overlapping portion 1121 and is perpendicular to the body portion 210. Here, the central axis O may pass between the first guide portion 220a and the second guide portion 220b, and between the first support portion 230a and the second support portion 230b. The first support portion 230a may protrude from the first guide portion 220a toward the second guide portion 220b. The second support portion 230b may protrude from the second guide portion 220b toward the first guide portion 220a. That is, the first support portion 230a and the second support portion 230b may be positioned between the first guide portion 220a and the second guide portion 220b.

The first support portion 230a and the second support portion 230b may be disposed to be spaced apart from each other. The first support portion 230a and the second support portion 230b may not be in contact with each other. Therefore, a space may be formed between the first support portion 230a and the second support portion 230b.

An air channel C may be formed in the space between the first support portion 230a and the second support portion 230b. For example, the air channel C may be blocked in the left-right direction (X-axis direction) by the first guide portion 220a, the second guide portion 220b, the first support portion 230a, and the second support portion 230b, the inner side (-Y side) thereof may be blocked by the body portion 210, and the outer side (+Y side) thereof may be blocked by the lead overlapping portion 1121. That is, the air channel C may be a space in which at least four surfaces are blocked. At this time, the air channel C may be a passage for air discharged through the air release jig 30. The air channel C may be a space through which air discharged by the air release jig 30 may flow. Here, air discharged through the air release jig 30 seated on the body portion 210 may be directed toward the lead overlapping portion 1121.

At this time, the size of the air channel C may be determined based on the sizes of the first support portion 230a and the second support portion 230b. The shape and structure of the air channel C may be determined based on the shapes and structures of the first support portion 230a and the second support portion 230b. As the sizes of the first support portion 230a and the second support portion 230b increase, the size of the air channel C may decrease in proportion thereto.

According to an embodiment of the present disclosure, the first support portion 230a and the second support portion 230b may be positioned in the passage for air discharged through the air release jig 30. In other words, the first support portion 230a and the second support portion 230b may be disposed within the air passage formed by the first guide portion 220a, the second guide portion 220b, the body portion 210, and the lead overlapping portion 1121. Therefore, the air pressure may be controlled by limiting or adjusting the cross-sectional area of the air passage by the support portion 230. The air pressure may be increased by limitedly blocking the air passage through the support portion 230, and the lead overlapping portion 1121 may be pressed outward by the air pressure to be in close contact.

The electrode lead 112 may pass through the slit 240 and be bent to face the body portion 210 of the cover frame 200. At this time, the electrode leads 112 passing through the first slit 240a may be referred to as first leads 112a, and the electrode leads 112 passing through the second slit 240b may be referred to as second leads 112b. For example, the first lead 112a may be a positive electrode lead, and the second lead 112b may be a negative electrode lead. Alternatively, it may be the opposite. However, as described above, the electrode lead 112 constituting the first lead 112a and the second lead 112b may vary depending on the pattern of the electrode lead 112. At this time, the first lead 112a and the second lead 112b may extend in an outward direction of the battery module 10 along the guide portion 220, and may be bent in a vertical direction from the outside of the cover frame 200.

The lead overlapping portion 1121 may be disposed to face and be parallel to the body portion 210. The lead overlapping portion 1121 may be disposed perpendicular to the guide portion 220. For example, the first lead 112a positioned on the left may be bent to the right. Additionally, the second lead 112b positioned on the right may be bent to the left. In this way, the first lead 112a and the second lead 112b that are bent in directions facing each other may overlap each other based on the central axis O.

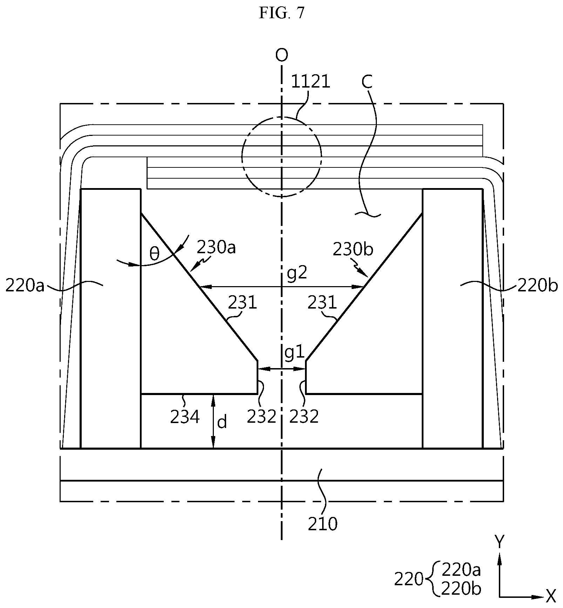

FIG. 7 is a further enlarged view of FIG. 6.

The support portion 230 may have an inclined surface 231 inclined at a specified angle (θ) with respect to the guide portion 220. For example, the specified angle (θ) may be approximately 30 degrees or more and less than 90 degrees. For example, the specified angle (θ) may be approximately 40 degrees or more and less than 60 degrees.

The inclined surface 231 may be formed such that the distance from the lead overlapping portion 1121 increases as it approaches the central axis O. For example, the inclined surface 231 of the first support portion 230a may be inclined in a direction toward the body portion 210, that is, in an inward direction of the battery module 10 (downward direction based on FIG. 7) as it moves toward the right. For example, the inclined surface 231 of the second support portion 230b may be inclined in a direction toward the body portion 210 as it moves toward the left.

The cross-sectional area of the air channel C may become narrower as the distance from the body portion 210 decreases due to the inclined surfaces 231 formed on each of the first support portion 230a and the second support portion 230b. That is, the cross-sectional area of the air channel C may become narrower as it moves in an inward direction of the battery cell 110.

The support portion 230 may further include a parallel surface 232 that extends from the inclined surface 231 and is parallel to the guide portion 220. The parallel surface 232 may extend from the inclined surface 231 in a direction toward the body portion 210 (inward direction of the battery cell 110). The parallel surface 232 may be disposed parallel to the direction in which air passing through the air channel C moves.

The parallel surface 232 of the first support portion 230a and the parallel surface 232 of the second support portion 230b may be spaced apart by a first gap g1. The inclined surface 231 of the first support portion 230a and the inclined surface 231 of the second support portion 230b may be spaced apart by a second gap g2. At this time, the first gap g1 may be formed narrower than the second gap g2.

According to an embodiment of the present disclosure, the first gap g1 that is closer to the body portion 210 may be formed relatively narrow, thereby inducing an increase in air pressure while air ejected from the air release jig 30 passes through the relatively narrow gap.

According to an embodiment of the present disclosure, an inclined surface 231 may be formed to induce the air pressure increased while passing through the first gap g1 to press the entire lead overlapping portion 1121.

The support portion 230 may further include a bottom surface 234 extending from the parallel surface 232 and connected to the guide portion 220. The bottom surface 234 may extend in a perpendicular direction from the parallel surface 232, and may be disposed parallel to the body portion 210.

The bottom surface 234 may be formed to be spaced apart from the body portion 210 by a first distance (d). The first distance (d) may be substantially equal to or greater than the height (length in the Y-axis direction) of the air release jig 30. Therefore, when the air release jig 30 is seated on the body portion 210, collision with the support portion 230 may be prevented.

FIG. 8 is a view showing a state in which a masking jig 20 and an air release jig 30 are seated on an electrode lead 112 and a cover frame 200.

The masking jig 20 may be configured to press the electrode lead 112. The masking jig 20 may be configured to press the electrode lead 112 to ensure that the electrode lead 112 is in close contact when welding the electrode lead 112. The masking jig 20 may be seated on the outer surface (upper surface based on FIG. 8) of the lead overlapping portion 1121. The masking jig 20 may be composed of a plurality of jigs disposed at the edge of the lead overlapping portion 1121. For example, two masking jigs 20 may be disposed on the left and right sides of the lead overlapping portion 1121, respectively. Therefore, the masking jig 20 may press the electrode lead 112 in a first direction ①. Here, the first direction ① may refer to the inward direction of the battery module 10, or the downward direction (-Y-axis direction) based on FIG. 8.

The air release jig 30 may be configured to support the electrode lead 112 by providing pneumatic pressure in a direction opposite to the pressing direction of the masking jig 20. When the masking jig 20 presses in the first direction ①, the air release jig 30 may apply pressure in a second direction ② opposite to the first direction ① to support the electrode lead 112. Here, the second direction ② may refer to the outward direction of the battery module 10, or the upward direction (+Y-axis direction) based on FIG. 8.

The air release jig 30 may be seated on the body portion 210. The air release jig 30 may not be in direct contact with the lead overlapping portion 1121. That is, the air release jig 30 may apply pressure to the electrode lead 112 in the second direction ② without directly contacting the lead overlapping portion 1121. For example, the air release jig 30 may release air toward the electrode lead 112 in the second direction ②, thereby pressing the electrode lead 112 by the air pressure.

The air channel C may be a passage through which air released by the air release jig 30 configured to press the other surface of the lead overlapping portion 1121 by applying a pressure (air pressure) in a second direction ② opposite to the first direction ①, which is the pressing direction of a masking jig 20 configured to press one surface of the lead overlapping portion 1121, flows in the second direction ②. At this time, the support portion 230 may increase the air velocity and increase the air pressure by partially reducing the cross-sectional area of the air channel C, which is a passage for air movement.

The masking jig 20 and the air release jig 30 may be disposed in opposite directions based on the lead overlapping portion 1121. Therefore, the masking jig 20 and the air release jig 30 may be configured to press the lead overlapping portion 1121 in opposite directions, and the pressing force of the masking jig 20 and the pressure of air released from the air release jig 30 may be configured to be equal.

According to an embodiment of the present disclosure, the pressure of air provided by the air release jig 30 may be adjusted in response to the pressing force of the masking jig 20 and the weight of the electrode leads 112 in the lead overlapping portion 1121, that is, the number of electrode leads 112 overlapped. For example, when the number of electrode leads 112 overlapped is large or the masking jig 20 is heavy, the pressure of air provided by the air release jig 30 may increase in response thereto. Therefore, the lead overlapping portion 1121 may be welded while maintaining equilibrium.

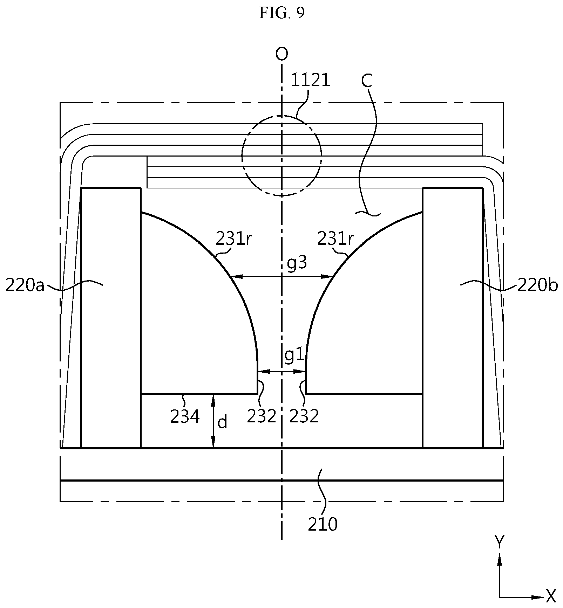

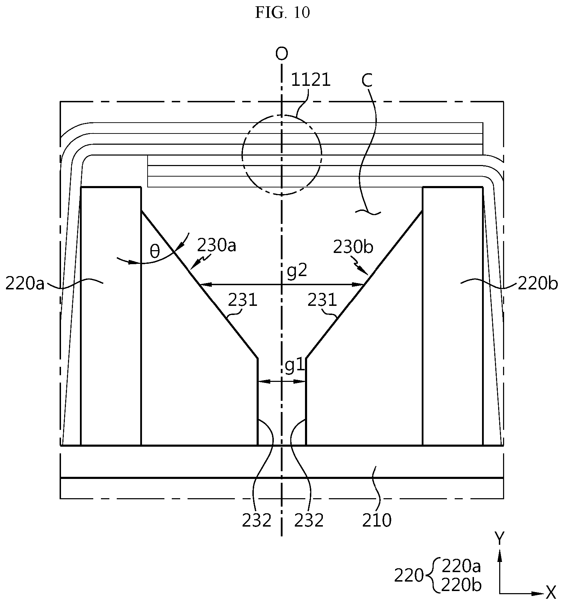

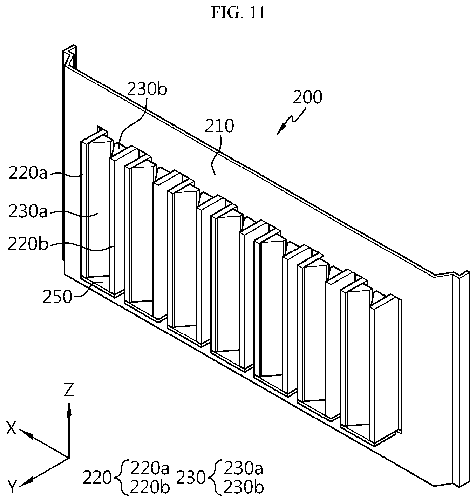

FIG. 9 is a view showing a support portion 230 according to another embodiment of the present disclosure. FIG. 10 is a view showing a support portion 230 according to still another embodiment of the present disclosure. FIG. 11 is a view showing a cover frame 200 according to still another embodiment of the present disclosure.

Referring to FIG. 9, the inclined surface 231 of FIGS. 1 to 7 may be configured as a curved surface 231r. The curved surface 231r may be formed such that its central part protrudes in a direction toward the lead overlapping portion 1121 (upward direction (+Y-axis direction) of FIG. 9). In other words, the positions of both ends of the inclined surface 231 of FIGS. 1 to 7 are the same, but the central part may be configured to protrude further upward. The curved surface 231r of the first support portion 230a and the curved surface 231r of the second support portion 230b may be spaced apart by a third gap g3. At this time, the third gap g3 may be formed narrower than the second gap g2 (the gap between the inclined surface 231 of the first support portion 230a and the inclined surface 231 of the second support portion 230b in FIG. 7).

According to an embodiment of the present disclosure, the gap between the support portions 230 may be formed even narrower to induce the pressure of air ejected from the air release jig 30 to be further enhanced, and at the same time, to allow the increased air pressure to press the entire lead overlapping portion 1121.

Referring to FIG. 10, the parallel surface 232 of the support portion 230 may extend to the body portion 210. That is, the support portion 230 and the body portion 210 may be in contact without being spaced apart from each other. The support portion 230 and the body portion 210 may be formed integrally. Therefore, the length of the air channel C between the parallel surface 232 of the first support portion 230a and the parallel surface 232 of the second support portion 230b may be increased. As the length of the air channel C with a narrow cross-sectional area between the parallel surface 232 of the first support portion 230a and the parallel surface 232 of the second support portion 230b increases, the air pressure may further increase.

Referring to FIG. 11, the cover frame 200 may further include a sealing portion 250 connecting the ends of the first guide portion 220a and the second guide portion 220b. The sealing portion 250 is disposed between the first guide portion 220a and the second guide portion 220b, and may vertically connect the first guide portion 220a and the second guide portion 220b. The sealing portion 250 may be configured to seal the air channel C more effectively. The sealing portion 250 may seal the lower direction (-Z-axis direction) of the air channel C. In addition, the air channel C may be sealed in the left-right direction (X-axis direction) by the support portion 230 and the guide portion 220, in the length direction (Y-axis direction) by the lead overlapping portion 1121 and the body portion 210, and in the upper direction (+Z-axis direction) by the air release jig 30. Ultimately, all six surfaces surrounding the air channel C may be sealed. Therefore, the air passing through the air channel C may not be dispersed or escape, and the air pressure may be maintained and increased.

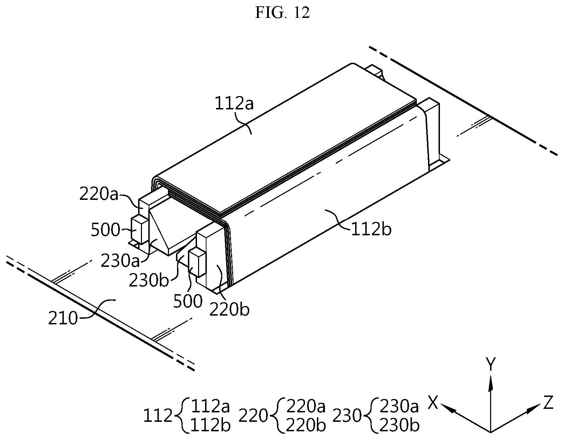

FIG. 12 is a view showing a portion of a battery module 10 according to still another embodiment of the present disclosure.

The battery module 10 may further include a first coupling member 500. The first coupling member 500 may be configured to be coupled in close contact with each other between the cover frame 200 and the air release jig 30.

At least a portion of the air release jig 30 may seal one surface of the air channel C. When the air release jig 30 is coupled to the battery module 10, at least a portion of the air release jig 30 may be coupled to the cover frame 200 to seal one surface of the air channel C. Therefore, the air passing through the air channel C may not be dispersed or escape, and the air pressure may be maintained and increased.

The first coupling member 500 may be positioned on one surface of the cover frame 200. The first coupling member 500 may be disposed on the lower surface or the upper surface of the guide portion 220. For example, when the sealing portion 250 of FIG. 11 is coupled to the upper end of the guide portion 220, the first coupling member 500 may be disposed on the lower surface of the guide portion 220. The sealing portion 250 and the air release jig 30 may seal the air channel C in opposite directions.

The first coupling members 500 may be provided in plurality. The first coupling members 500 may be coupled and/or attached to the first guide portion 220a and the second guide portion 220b, respectively. The first coupling member 500 may be coupled to the second coupling member 37 provided on the air release jig 30. For example, when the air release jig 30 and the cover frame 200 are coupled, the first coupling member 500 and the second coupling member 37 may be coupled in an alternating manner. When the air release jig 30 is coupled to the battery module 10, the first coupling member 500 and the second coupling member 37 may be disposed side by side in close contact between the guide portion 220 and the air release jig 30.

The first coupling member 500 may include an elastic material such as silicone. Accordingly, the first coupling member 500 may be compressed by the guide portion 220 and the air release jig 30. The first coupling member 500 may be configured to be pressed in the upper-lower direction (Z-axis direction) by the guide portion 220 and the air release jig 30. For example, the shape of the first coupling member 500 may be a cuboidal shape. However, the shape and material of the first coupling member 500 are not limited by the embodiment and may be designed and modified in various ways.

According to the above embodiment of the present disclosure, the first coupling member 500 may be in close contact by the guide portion 220 and the air release jig 30, thereby more reliably preventing the air passing through the air channel C from escaping through the gap. Therefore, the air channel C may be sealed more effectively.

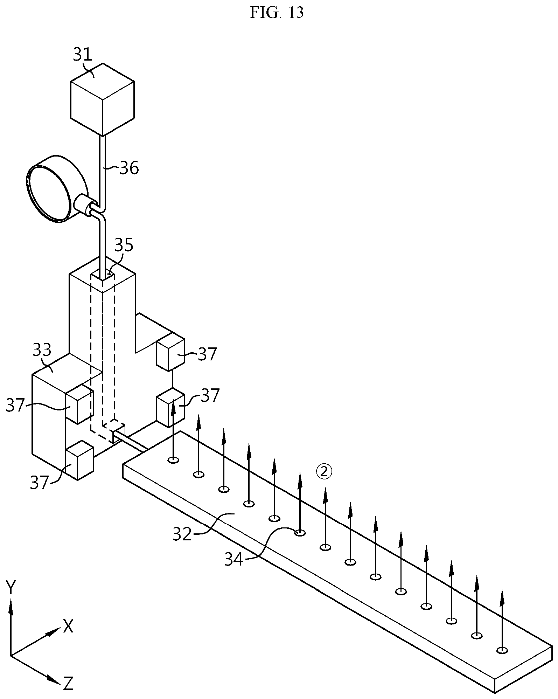

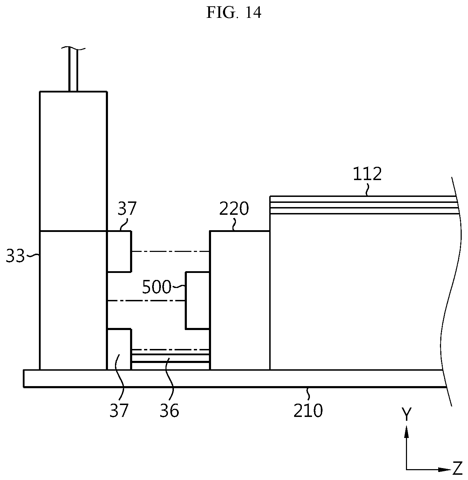

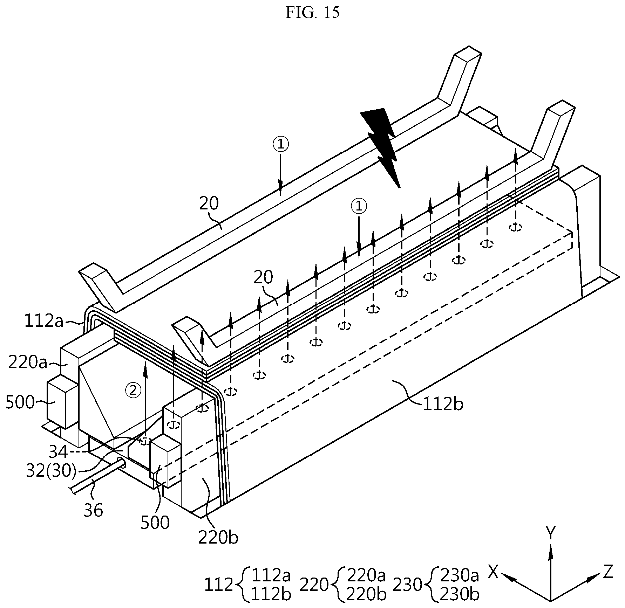

FIG. 13 is a perspective view showing an air release jig 30 used during electrode lead 112 welding according to an embodiment of the present disclosure. FIG. 14 is a side view showing a state in which an air release jig 30 and a battery module 10 are being coupled to each other according to an embodiment of the present disclosure. FIG. 15 is a view showing a state in which a masking jig 20 and an air release jig 30 are coupled to a battery module according to an embodiment of the present disclosure.

The air release jig 30 may include a pump unit 31, an air release unit 32, and a main body 33.

The pump unit 31 may be configured to inject air. The pump unit 31 is configured to move gas by applying pressure, and various pumps known at the time of filing of the present disclosure may be employed to configure the pump unit 31 of the present disclosure.

The air release unit 32 may be seated on the body portion 210 and configured to release air toward the lead overlapping portion 1121 through the air channel C.

A hole 34 for releasing air may be formed on one surface (upper surface) of the air release unit 32 facing the lead overlapping portion 1121. The holes 34 may be formed in plurality. The plurality of holes 34 may be disposed to be spaced apart along the extension direction of the air release unit 32. For example, nozzles may be provided in the hole 34.

The main body 33 may include a conduit 35 connecting the pump unit 31 to the air release unit 32. At least a portion of the conduit 35 may extend in the upper-lower direction (Z-axis direction). The main body 33 may be positioned below the pump unit 31. Therefore, air may be introduced more smoothly. The upper end of the conduit 35 may have a shape that is open toward the pump unit 31 positioned at the upper side. The lower end of the conduit 35 may be formed to be bent in a direction toward the air release unit 32. Therefore, the air introduced through the conduit 35 may be directed toward the air release unit 32. The conduit 35 may extend generally in a vertical direction to allow air to move easily from the pump unit 31 toward the air release unit 32. Therefore, the air pressure may be further increased and the air velocity may be induced to increase.

The pump unit 31, the air release unit 32, and the main body 33 may be connected through a hose 36. The air released by the pump unit 31 may move to the main body 33 and the air release unit 32 through the hose 36, and may be discharged in the second direction ② through the air release unit 32.

Meanwhile, referring to FIG. 15, the air release unit 32 may further include a conduit connection hole connected to the conduit 35 formed in the main body 33 on one surface facing the main body 33 and configured to allow the hose 36 to pass therethrough. The conduit connection hole may serve as a passage through which air is injected into the air release unit 32.

The air release jig 30 may further include a second coupling member 37. The second coupling member 37 may be configured to be coupled in close contact with each other between the cover frame 200 and the air release jig 30. The second coupling member 37 may be coupled and/or attached to the main body 33 of the air release jig 30. For example, the second coupling member 37 may be attached to one surface of the main body 33 facing the cover frame 200.

The second coupling members 37 may be provided in plurality. When the main body 33 and the guide portion 220 are coupled, the second coupling members 37 may be attached to positions facing the first guide portion 220a and the second guide portion 220b, respectively. For example, referring to FIG. 13, two second coupling members 37 may be attached to positions facing the first guide portion 220a, and two second coupling members 37 may be attached to positions facing the second guide portion 220b.

Referring to FIG. 14, when the air release jig 30 and the cover frame 200 are coupled, the second coupling member 37 may be configured to contact the guide portion 220.

The second coupling member 37 may be in contact with the first coupling member 500 constituting the battery module 10. For example, when the air release jig 30 and the cover frame 200 are coupled, the first coupling member 500 and the second coupling member 37 may be coupled in an alternating manner. For example, the first coupling member 500 may be inserted between two second coupling members 37 to be in close contact with each other. That is, the first coupling member 500 and the second coupling member 37 may be disposed side by side in close contact between the guide portion 220 and the main body 33 of the air release jig 30.

The second coupling member 37 may include an elastic material such as silicone. Accordingly, the second coupling member 37 may be compressed by the guide portion 220 and the air release jig 30. The second coupling member 37 may be configured to be pressed in the upper-lower direction (Z-axis direction) by the guide portion 220 and the air release jig 30. For example, the shape of the second coupling member 37 may be a cuboidal shape. However, the shape and material of the second coupling member 37 are not limited by the embodiment and may be designed and modified in various ways.

According to the above embodiment of the present disclosure, the second coupling member 37 may be in close contact by the guide portion 220 and the air release jig 30, thereby more reliably preventing the air passing through the air channel C from escaping through the gap. Therefore, the air channel C may be sealed more effectively.

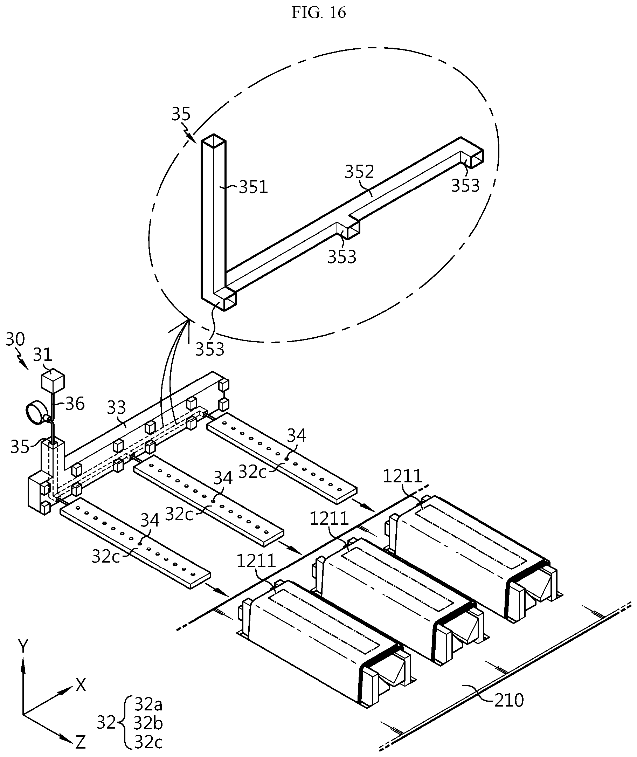

FIG. 16 is a perspective view showing an air release jig 30 according to another embodiment of the present disclosure.

Referring to FIG. 16, the air release jig 30 may simultaneously apply pressure to a plurality of lead overlapping portions 1121. That is, the air release jig 30 may be used when simultaneously welding a plurality of lead overlapping portions 1121 of a plurality of battery cells 110 accommodated in the battery module 10. The air release jig 30 according to FIG. 16 may be at least partially identical to or similar to the air release jig 30 according to FIGS. 13 to 15.

The air release jig 30 may include a plurality of air release units 32. The plurality of air release units 32 may be disposed to be spaced apart along the stacking direction of the battery cells 110. The plurality of air release units 32 may be disposed to be spaced apart at a predetermined interval to correspond to the position where the lead overlapping portions 1121 are spaced apart. Each of the air release units 32 may be positioned below each of the lead overlapping portions 1121 disposed side by side. For example, the air release unit 32 may include a first release unit 32a, a second release unit 32b, and a third release unit 32c that are spaced apart side by side along the stacking direction of the battery cells 110. However, the number of air release units 32 is not limited by the above embodiment, and may be designed and modified in various ways.

The main body 33 of the air release jig 30 may be formed to extend long along the stacking direction of the battery cells 110. The main body 33 may be coupled to a plurality of air release units 32 positioned to be spaced apart from each other.

The lower end of the conduit 35 provided in the main body 33 may be configured in a parallel structure to be connected to all of the plurality of air release units 32. For example, the conduit 35 of the main body 33 may include a first portion 351 extending in the upper-lower direction, a second portion 352 extending in the left-right direction, and third portions 353 each extending in the front direction from the second portion 352 to correspond to the number and positions of the plurality of air release units 32.

According to an embodiment of the present disclosure, it is possible to minimize repeated attachment and detachment to each lead overlapping portion 1121 for welding a plurality of lead overlapping portions 1121. Additionally, the plurality of lead overlapping portions 1121 may be welded at once, thereby improving the manufacturing speed and shortening the manufacturing time.

Hereinafter, a method for manufacturing a battery module 10 will be described. In particular, a method for welding electrode leads 112 in the method for manufacturing a battery module 10 will be described.

The method for manufacturing a battery module 10 may include a step of preparing the cover frame 200. The cover frame 200 may be prepared to be coupled to the cell stack 100. The cover frame 200 may be coupled to the front or rear part of the cell stack 100.

The method for manufacturing a battery module 10 may further include a step of inserting two or more electrode leads 112 into the slits 240 formed in the cover frame 200 and drawing them out in a direction toward the outside of the battery module 10.

The method for manufacturing a battery module 10 may further include a step of bending two or more electrode leads 112 passing through the slits 240 to overlap each other to form the lead overlapping portion 1121, and positioning the lead overlapping portion 1121 outside the cover frame 200.

The method for manufacturing a battery module 10 may further include a step of placing the masking jig 20 on the outer surface of the lead overlapping portion 1121 and pressing the outer surface of the lead overlapping portion 1121 using the masking jig 20.

The method for manufacturing a battery module 10 may further include a step of placing the air release jig 30 between the body portion 210 and the lead overlapping portion 1121 and pressing the inner surface of the lead overlapping portion 1121 using the air release jig 30.

The step of pressing the outer surface of the lead overlapping portion 1121 using the masking jig 20 and the step of pressing the inner surface of the lead overlapping portion 1121 using the air release jig 30 may be performed simultaneously.

The masking jig 20 and the air release jig 30 may be disposed in opposite directions based on the lead overlapping portion 1121 to press the lead overlapping portion 1121 in opposite directions, and the pressing force of the masking jig 20 and the pressure of air released from the air release jig 30 may be configured to be equal.

The method for manufacturing a battery module 10 may further include a step of performing welding on the lead overlapping portion 1121. The welding method performed at this time may adopt any one of, for example, laser welding, ultrasonic welding, or resistance welding.

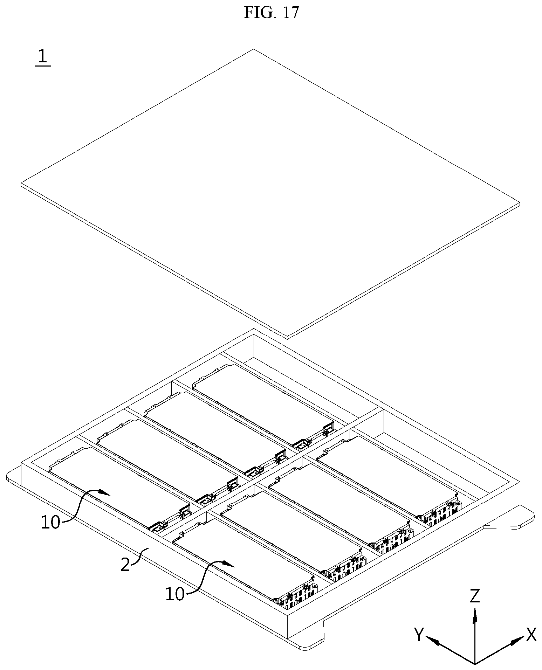

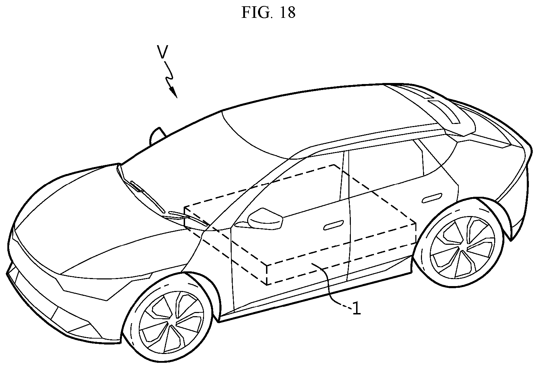

FIG. 17 is a view for describing a battery pack 1 including a battery module 10 according to an embodiment of the present disclosure. FIG. 18 is a view for describing a vehicle including the battery pack 1 of FIG. 17.

Referring to FIG. 17, a battery pack 1 according to the present disclosure may include at least one battery module 10 according to the present disclosure described above. The battery pack 1 according to the present disclosure may further include a battery management system (BMS) for integrated control of charging and discharging of one or more battery modules 10, a current sensor, a fuse, and the like, and a pack case 2 for accommodating the above-described components. As illustrated, the battery pack 1 may be configured using a battery module 10, which is an intermediate form of assembly, or may directly accommodate a cell stack 100 without a battery module 10. For example, the battery pack 1 of the present disclosure may be manufactured by a cell to pack process. For example, the battery pack 1 of the present disclosure may be manufactured by a cell to chassis process. Here, the battery module 10 may refer to a battery module 10, a cell stack 100, or the like.

Referring to FIG. 18, a vehicle V according to the present disclosure may include at least one battery pack 1 according to the present disclosure.

The battery cell 110 according to the present disclosure may be applied to a vehicle such as an electric vehicle or a hybrid vehicle. That is, the vehicle V according to the present disclosure may include a battery cell 110 according to the present disclosure, a battery module 10 according to the present disclosure, or a battery pack 1 according to the present disclosure. The vehicle V according to the present disclosure may be, for example, an electric vehicle, a hybrid vehicle, or a plug-in hybrid vehicle. The vehicle V includes a four-wheeled vehicle and a two-wheeled vehicle. The vehicle V operates by receiving power from the battery pack 1, the battery module 10, or the cell stack 100 according to an embodiment of the present disclosure.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. A battery module comprising:
a cell stack composed of a plurality of battery cells that each has an electrode lead; and
a cover frame covering the front or rear part of the cell stack,
wherein the plurality of electrode leads comprise a lead overlapping portion formed to overlap at least partially on the outside of the cover frame and configured to be welded, and
wherein the cover frame comprises:
a body portion having a slit through which the electrode lead passes; and
a support portion that is disposed to be spaced apart from the lead overlapping portion, is positioned between the lead overlapping portion and the body portion, and assists in the mutual close contact and welding of the lead overlapping portions.

2. The battery module according to claim 1,
wherein the support portion comprises a first support portion and a second support portion that are spaced apart from each other and disposed to face each other, and is configured such that an air channel is formed in a space between the first support portion and the second support portion.

3. The battery module according to claim 2,
wherein the cover frame further comprises a guide portion that protrudes from the body portion toward the outside of the battery module and has a first guide portion and a second guide portion spaced apart in the stacking direction of the battery cells,
wherein the first support portion protrudes from the first guide portion toward the second guide portion, and
wherein the second support portion protrudes from the second guide portion toward the first guide portion.

4. The battery module according to claim 3,
wherein the support portion comprises an inclined surface that is inclined at a specified angle with respect to the guide portion and is configured such that the distance from the lead overlapping portion increases as the inclined surface approaches the central axis between the first guide portion and the second guide portion

5. The battery module according to claim 4,
wherein the air channel has a cross-sectional area that becomes narrower as the distance from the body portion decreases due to the inclined surfaces formed on the first support portion and the second support portion, respectively.

6. The battery module according to claim 5,
wherein the support portion further comprises a parallel surface extending from the inclined surface toward the body portion and parallel to the guide portion,
wherein the parallel surface of the first support portion and the parallel surface of the second support portion are spaced apart by a first gap, and
wherein the inclined surface of the first support portion and the inclined surface of the second support portion are spaced apart by a second gap wider than the first gap.

7. The battery module according to claim 2,
wherein the air channel is a passage through which air released by an air release jig configured to press the other surface of the lead overlapping portion by providing a pressing force in a second direction opposite to a first direction, which is the pressing direction of a masking jig configured to press one surface of the lead overlapping portion, flows in the second direction.

8. The battery module according to claim 7,
wherein the masking jig and the air release jig are disposed in opposite directions based on the lead overlapping portion to press the lead overlapping portion in opposite directions, and the pressing force of the masking jig and the pressure of air released from the air release jig are configured to be equal.

9. The battery module according to claim 3,
wherein the cover frame further comprises a sealing portion connecting the ends of the first guide portion and the second guide portion.

10. The battery module according to claim 7, further comprising:
a first coupling member positioned on one surface of the cover frame and configured to be coupled in close contact with each other between the cover frame and the air release jig.

11. An air release jig used in the manufacture of a battery module according to claim 7, the air release jig comprising:
a pump unit configured to inject air;
an air release unit seated on the body portion and configured to release air toward the lead overlapping portion through the air channel; and
a main body having a conduit connecting the pump unit to the air release unit.

12. The air release jig according to claim 11, further comprising:
a second coupling member positioned on one surface of the main body and configured to be coupled in close contact with each other between the cover frame and the air release jig.

13. The air release jig according to claim 11,
wherein the air release units are provided in plurality, and the plurality of air release units are disposed to be spaced apart along the stacking direction of the battery cells, and
wherein the conduit is configured in a parallel structure to be connected to each of the plurality of air release units.

14. A battery pack comprising a battery module according to any one of claims 1 to 10.

15. A vehicle comprising a battery module according to any one of claims 1 to 10.

16. A method for manufacturing a battery module according to claim 7, the method comprising:
a step of preparing the cover frame;
a step of inserting two or more of the electrode leads into the slits formed in the cover frame and drawing them out in a direction toward the outside of the battery module;
a step of bending two or more of the electrode leads passing through the slits to overlap each other to form the lead overlapping portion, and positioning the lead overlapping portion outside the cover frame;
a step of placing the masking jig on the outer surface of the lead overlapping portion and pressing the outer surface of the lead overlapping portion using the masking jig;
a step of placing the air release jig between the body portion and the lead overlapping portion and pressing the inner surface of the lead overlapping portion using the air release jig; and
a step of performing welding on the lead overlapping portion.

17. The method for manufacturing a battery module according to claim 16,
wherein the masking jig and the air release jig are disposed in opposite directions based on the lead overlapping portion to press the lead overlapping portion in opposite directions, and the pressing force of the masking jig and the pressure of air released from the air release jig are configured to be equal.
